# EUROPÄISCHE PATENTSCHRIFT

(11) **EP 4 246 002 B1**
(45) Veröffentlichungstag und Bekanntmachung des Hinweises auf die Patenterteilung: **21.02.2024**
(21) Anmeldenummer: 22162787.0
(22) Anmeldetag: 17.03.2022
(51) Int. Cl.: F15B 15/28, F15B 21/00, G01S 13/88, F15B 15/14

(54) **KOLBEN-ZYLINDER-EINHEIT**
PISTON-CYLINDER UNIT
UNITÉ PISTON ET CYLINDRE

(43) Veröffentlichungstag der Anmeldung: 20.09.2023
(73) Patentinhaber: Pacoma GmbH, 37269 Eschwege (DE)
(72) Erfinder: Leicht, Günter, 96135 Stegaurach (DE); Herwig, Karl-Wilhelm, 37214 Witzenhausen (DE)
(74) Vertreter: Kraus & Lederer PartGmbB

(56) Entgegenhaltungen:
- EP-A1- 3 957 868
- EP-A2- 1 217 220
- DE-A1-102019 122 121
- DE-U1-202019 101 788
- JP-A- H10 238 513
- US-A- 5 182 980
- US-A1- 2019 296 504
- US-B1- 8 047 122

## Beschreibung

### TECHNISCHES GEBIET DER ERFINDUNG

Die vorliegende Erfindung betrifft eine Kolben-Zylinder-Einheit. Die Kolben-Zylinder-Einheit kann in einer Arbeitsmaschine (insbesondere eine Baumaschine, eine landwirtschaftliche Maschine, eine maritime Maschine, ein Radlader, ein Bagger, ein Kipper, ein Kran, ein Stapler, eine Hebebühne oder eine andere Arbeitsmaschine, die in bekannter Weise Einsatz findet im Maschinenbau) eingesetzt werden. Die Kolben-Zylinder-Einheit kann dabei bspw. einem Lenken, Stützen, Ausschieben, Neigen, Heben, Senken oder sonstigen Bewegen eines Teils der Arbeitsmaschine (insbesondere eines Werkzeugs, einer Schwinge oder eines anderen Teils der Arbeitsmaschine) dienen. Vorzugsweise handelt es sich um eine hydraulische Kolben-Zylinder-Einheit.

### STAND DER TECHNIK

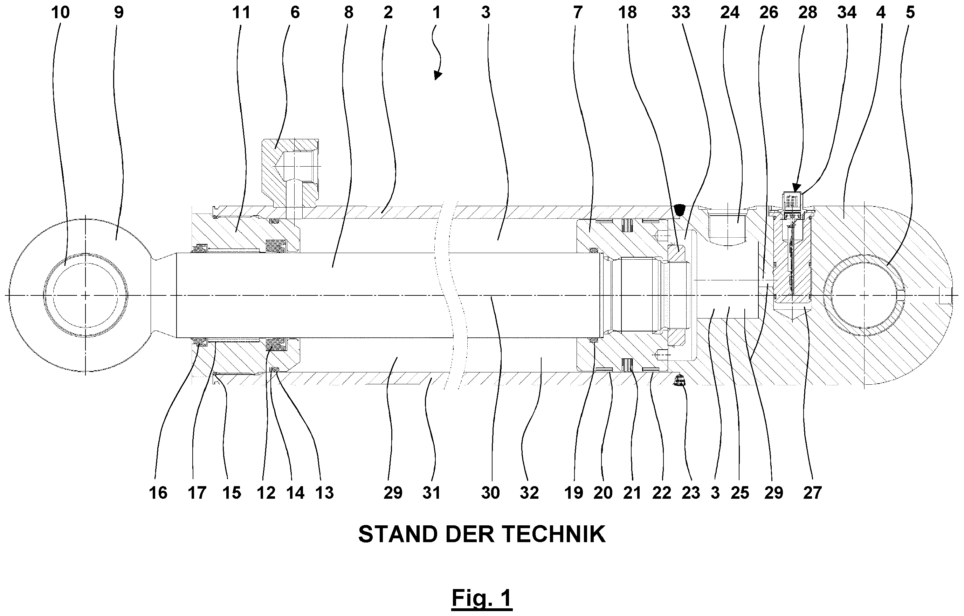

Eine gattungsgemäße Kolben-Zylinder-Einheit ist aus der Druckschrift DE 10 2019 122 121 A1 bekannt. Diese bekannte Kolben-Zylinder-Einheit ist in Fig. 1 dargestellt. In Fig. 1 ist mittels Abbruchlinien kenntlich gemacht, dass die Kolben-Zylinder-Einheit 1 tatsächlich länger ausgebildet sein kann und nur ein Teil von dieser dargestellt ist. Die Kolben-Zylinder-Einheit 1 weist einen Zylinder 2 mit einem Zylinderrohr 31, einem Innenraum 3 und einem Zylinderkopf 4 auf. Das Zylinderrohr 31 ist über eine Schweißnaht 23 mit dem Zylinderkopf 4 verbunden. Im Bereich des Zylinderkopfs 4 ist eine Lagerbuchse 5 angeordnet. In DE 10 2019 122 121 A1 handelt es sich um eine hydraulische Kolben-Zylinder-Einheit 1, so dass der Innenraum 3 mit einem Hydraulikfluid 29, insbesondere Öl, gefüllt ist. Hierfür weist der Zylinder 2 einen Anschluss 6 und einen Anschluss 24 auf. An den Anschlüssen 6, 24 ist ein hier nicht dargestellter Hydraulikkreis mit einer Hydraulikpumpe und Umschaltventilen angeschlossen. Die Anschlüsse 6, 24 münden jeweils in eine zugeordnete Druckkammer 32, 33. Die Druckkammern 32, 33 sind in dem Innenraum 3 ausgebildet und durch einen Kolben 7 voneinander getrennt. Der Kolben 7 ist unter Abdichtung der Druckkammern 32, 33 entlang der Längsmittelachse 30 des Zylinders 2 verschieblich. Je nach mittels des Hydraulikkreises an den Anschlüssen 6, 24 erzeugtem Druck kann hydraulisch eine Stellkraft mit beiden Richtungssinnen entlang der Längsmittelachse 30 erzeugt werden, die auf den Kolben 7 wirkt, und mit der dadurch erzeugten Stellbewegung des Kolbens 7 eine Veränderung des Volumens der Druckkammern 32, 33 herbeigeführt werden. Fig. 1 zeigt die ganz nach rechts verfahrene Stellung des Kolbens 7, d. h. die eingefahrene Stellung der Kolben-Zylinder-Einheit 1. Der Kolben 7 ist mit einer Kolbenstange 8 verbunden, an deren außenliegendem Ende ein Kolbenstangenauge 9 angeordnet ist. Das Kolbenstangenauge 9 weist ebenfalls eine Lagerbuchse 10 auf. Die Lagerbuchsen 5, 10 dient der Anlenkung der Kolben-Zylinder-Einheit 1 an die Teile der Arbeitsmaschine, die mittels der Kolben-Zylinder-Einheit 1 relativ zueinander bewegt werden sollen und/oder auf die die Kolben-Zylinder-Einheit 1 eine Kraft ausüben soll. Die Kolbenstange 8 ist mittels einer Führungsbuchse 11 in axialer Richtung entlang der Längsmittelachse 30 translatorisch beweglich gelagert. Für die Lagerung und Abdichtung sind eine Stangendichtung 12, ein O-Ring 13 und ein Stützring 14 vorgesehen. Am anderen axialen Ende der Führungsbuchse 11 sind ein weiterer O-Ring 15, ein Abstreifer 16 und ein Gleitlager 17 angeordnet. Der Kolben 7 ist drehfest auf der Kolbenstange 8 angeordnet und mittels einer Sicherungsmutter 18 gesichert. Des Weiteren sind an dem Kolben 7 ein O-Ring 19, ein Kolbenführungsring 20, eine Kolbendichtung 21 und ein weiterer Kolbenführungsring 22 angeordnet. In dieser Weise ist der Kolben 7 gemeinsam mit der Kolbenstange 8 und dem Kolbenstangeauge 9 translatorisch hin- und hergehend abdichtend in dem Zylinderrohr 31 des Zylinders 2 gelagert. An den Teil der Druckkammer 33, der durch das Zylinderrohr 31 begrenzt ist, schließt sich eine Teilkammer 25 der Druckkammer 33 in dem Zylinderkopf 4 an. Die Teilkammer 25 ist mit dem Anschluss 24 verbunden. In diese Teilkammer 25 mündet ein sich axial erstreckender Sensorsignalkanal 26. Der Sensorsignalkanal 26 ist ebenfalls Teil der Druckkammer 33 und somit mit dem Hydraulikfluid gefüllt. Der Sensorsignalkanal 26 ist wiederum mit einer sich radial zu der Längsmittelachse 30 in dem Zylinderkopf 4 erstreckenden Querbohrung 27 verbunden. Die Querbohrung 27 erstreckt sich bis zur äußeren Oberfläche des Zylinderkopfs 4 und kann mittels einer nicht dargestellten Ausgleichsbohrung mit der Umgebung verbunden sein. In der Querbohrung 27 ist ein Kolbenbewegungssensor 28 angeordnet. Der Kolbenbewegungssensor 28 dient dazu, mittels Hochfrequenztechnik die axiale Position des Kolbens 7 in dem Zylinder 2 zu erfassen. Zu diesem Zweck sendet der Kolbenbewegungssensor 28 ein Hochfrequenzsignal aus, welches durch den Sensorsignalkanal 26 und durch die Teilkammer 25 sowie durch die Drucckammer 33 auf die Stirnfläche des Kolbens 7 oder der Kolbenstange 8 auftrifft und nach der Reflektion durch diese Stirnseite wieder zurück zu dem Kolbenbewegungssensor 28 gelangt. Aus dem reflektierten Signal kann dann mittels der Hochfrequenztechnik, insbesondere durch Auswertung der Laufzeit, das Bewegungssignal, insbesondere der zurückgelegte Weg der Stirnseite, ermittelt werden. Für das in Fig. 1 dargestellte Ausführungsbeispiel ist der Kolbenbewegungssensor 28 mit dem Hydraulikfluid beaufschlagt. Ein Sensorgehäuse des Kolbenbewegungssensors 28 verfügt über Dichtungen, mit welchen der Kolbenbewegungssensor 28 axial beidseits des Sensorsignalkanals 26 so abgedichtet ist, dass das Hydraulikfluid nicht aus der Drucckammer 33 und über die Querbohrung 27 austreten kann. Der Kolbenbewegungssensor 28 verfügt hier über einen Anschlussstecker 34, der von dem Sensorgehäuse des Kolbenbewegungssensors 28 getragen ist und sich radial aus dem Zylinderkopf 4 heraus erstreckt. Hinsichtlich weiterer Details wird auf die Druckschrift DE 10 2019 122 121 A1 verwiesen.

Eine Weiterentwicklung dieser Kolben-Zylinder-Einheit 1 ist aus der Druckschrift EP 3 957 868 A1 bekannt. Hier wird vorgeschlagen, dass in dem Strahlengang für das Hochfrequenzsignal ein Kollimator oder eine dielektrische Linse angeordnet ist, der bzw. die zur Erhöhung der Messgenauigkeit des Kolbenbewegungssensors dient. Unter einem Kollimator wird dabei eine optische Vorrichtung zum Erzeugen eines Strahlengangs mit parallelen Strahlen aus zuvor nicht-parallelen Strahlen divergenter Quellen verstanden. In einem ersten Strahlungsrichtungssinn von einer Sendeeinheit des Kolbenbewegungssensors zu der Stirnseite des Kolbens oder der Kolbenstange wandelt dabei der Kollimator die von dem Kolbenbewegungssensor ausgesendeten nicht-parallelen Strahlen in parallele Strahlen um, die dann auch parallel von der Stirnseite des Kolbens oder der Kolbenstange reflektiert werden. Die reflektierten Hochfrequenzstrahlen werden dann in dem entgegengesetzten zweiten Strahlungsrichtungssinn wieder durch den Kollimator gebündelt, damit diese von einer Empfangseinheit des Kolbenbewegungssensors empfangen und ausgewertet werden können. Der Kollimator kann dabei auch als eine Art Filter wirken, der nur oder im Wesentlichen die Hochfrequenzstrahlen auf den Kolbenbewegungssensor fokussiert, die zuvor parallel zueinander und zu der Längsachse des Kolbens verlaufen sind. Damit können Hochfrequenzstrahlen herausgefiltert werden, die nicht oder zumindest nicht direkt von der endseitigen Kolbenbodenfläche stammen. Solche unerwünschten Strahlen sind darauf zurückzuführen, dass in der Realität die Brechung des Kollimators nicht ideal ist, die Strahlen nicht ideal punktförmig abgesendet und empfangen werden und die Kolbenbodenfläche nicht ideal eben ist. Durch den Einsatz des Kollimators soll das Signal-Rausch-Verhältnis verbessert werden. Der Kollimator kann eine dielektrische Linse aufweisen. Möglich ist auch der Einsatz mehrerer dielektrischer Linsen oder einer Fresnel-Zonenplatte. Die dielektrische Linse kann dabei eine konvex gewölbte Linsenfläche aufweisen und/oder aus einem dielektrischen Kunststoff oder einer dielektrischen Keramik, Polytetrafluorethylen, Polyethylen oder Polypropylen bestehen oder dieses Material aufweisen. Die dielektrische Linse besitzt vorzugsweise eine Dielektrizitätskonstante (Permittivität), die größer ist als die von Luft und größer als die des Hydraulikfluids in der Kolben-Zylinder-Einheit. Die Permittivität kann dabei beispielsweise zwischen 20 % und 50 % größer sein als die des Hydraulikfluids in der Kolben-Zylinder-Einheit. Die Permittivitätsdifferenz und die Krümmung der dielektrischen Linse sind dabei aufeinander abgestimmt. Die dielektrische Linse kann eine planare-konvexe Linsenform aufweisen. Die konvexe Seite der Linse kann dabei dem Kolben zugewandt sein. Hingegen ist dann die planare Seite dem Kolbenbewegungssensor zugewandt. Der Kollimator kann von dem Sensorgehäuse ausgebildet sein oder von dem Kolbenbewegungssensor selbst und dem Sensorgehäuse strukturell getrennt sein. Der Kolbenbewegungssensor kann auch als kompakte Einbaupatrone ausgebildet sein, die sowohl den Sensor als auch die Auswerteelektronik enthält. Der Kolbenbewegungssensor ist mit einer Orientierung in der Querbohrung angeordnet, so dass sich die längste Dimension des Kolbenbewegungssensors in Richtung der Längsachse der Querbohrung erstreckt. Abseits des Sensorsignalkanals können an einem Boden der Teilkammer Strahlablenkungselemente angeordnet sein, um Verfälschungen der Messergebnisse zu vermeiden. Der Kollimator kann in dem Sensorsignalkanal angeordnet sein. Hinsichtlich weiterer Details wird auf die Druckschrift EP 3 957 868 A1 verwiesen.

US 8,047,122 B1 offenbart eine als Spanneinrichtung ausgebildete langgestreckte Kolben-Zylinder-Einheit, bei der ein Laser von außen an der Wandung des Zylinders montiert ist. Ein Laserstrahl, welcher parallel zur Längsachse des Zylinderkopfes von dem Laser ausgestrahlt wird, wird über eine erste Umlenkung und eine zweite Umlenkung so um insgesamt 180° umgelenkt, dass dieser von dem Zylinderkopf parallel zur Längsachse des Zylinders in Richtung des Kolbens gesendet wird. Der an dem Kolben reflektierte Laserstrahl wird dann durch die beiden Umlenkeinrichtungen einer mit dem Laser zu einer Baueinheit zusammengefügten Kamera zugeführt. Die Auswertung der Kamera ermöglicht dann die Ermittlung der Position des Kolbens.

US 5,182,980 A offenbart eine Kolben-Zylinder-Einheit, bei der der Zylinderkopf eine Querbohrung aufweist, die in die Druckkammer der Kolben-Zylinder-Einheit mündet. In der Querbohrung ist ein Sensorgehäuse angeordnet. Durch das Sensorgehäuse erstreckt sich ein radialer erster Abschnitt einer Antenne. In dem radial innen liegenden Endbereich ist die Antenne abgewinkelt zu einem zweiten Abschnitt, der sich parallel und in geringem Abstand von einer Kolbenstange der Kolben-Zylinder-Einheit erstreckt. In dem von dem ersten Abschnitt abgewandten Endbereich geht der zweite Abschnitt über eine Abwinklung über in einen dritten Abschnitt, der in dem Zylinderkopf fixiert ist. Das Sensorgehäuse verfügt über Umfangsnuten, im Bereich welcher eine fluidische Abdichtung zwischen dem Sensorgehäuse und dem Zylinderkopf erfolgt.

DE 20 2019 101 788 U1 offenbart einen Kolbenbewegungssensor, der auf dem magnetostriktiven Messprinzip beruht und von der Seite der Druckkammer in eine als Sacklochbohrung ausgebildete Längsbohrung des Zylinderkopfes eingesetzt ist. Der Kolbenbewegungssensor verfügt über radiale Nuten und darin angeordnete Dichtungen, über welche der Kolbenbewegungssensor gegenüber der Längsbohrung des Zylinderkopfes abgedichtet ist.

Auch EP 1 217 220 A2 offenbart die Anordnung eines Kolbenbewegungssensors in einer Längsbohrung eines Zylinderkopfes.

JP H10 238 513 A offenbart einen Ultraschall-Sensorkopf, der in einer radialen Bohrung eines Zylinderkopfes einer Kolben-Zylinder-Einheit angeordnet ist. Ein von dem Sensorkopf ausgesendetes Ultraschallsignal wird durch ein Umlenkelement, welches in einer mit der Druckkammer verbundenen Längsbohrung angeordnet ist, um 90 °so umgelenkt, dass das Ultraschallsignal parallel zur Längsachse der Kolben-Zylinder-Einheit verläuft, auf die Stirnseite des Kolbens auftrifft, von der Stirnseite reflektiert wird und über das Umlenkelement wieder zu dem Sensorkopf gelangt.

Auch US 2019/0 296 504 A1 offenbart einen in einer Längsbohrung eines Zylinderkopfes angeordneten Kolbenbewegungssensor, der auf einem magnetostriktiven Messprinzip beruht.

### AUFGABE DER ERFINDUNG

Der vorliegenden Erfindung liegt die Aufgabe zugrunde, eine Kolben-Zylinder-Einheit mit einem in dem Zylinderkopf integrierten Kolbenbewegungssensor vorzuschlagen, die insbesondere hinsichtlich
- des Montage- und/oder Demontageaufwands und/oder
- der Bauteilvielfalt und/oder
- der Beanspruchungen des Kolbenbewegungssensors
verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung schlägt eine Kolben-Zylinder-Einheit vor, die einen Zylinder mit einem Zylinderkopf, einen in dem Zylinder axial bewegbaren Kolben, der über eine Druckkammer mit einem unter einem Druck stehenden Fluid beaufschlagt ist, und einen Kolbenbewegungssensor aufweist. Hierbei ist der Kolbenbewegungssensor in einer eine Längsachse aufweisenden Querbohrung des Zylinderkopfs angeordnet. Der Kolbenbewegungssensor sendet ein Sensorsignal aus. Das Sensorsignal gelangt von dem Kolbenbewegungssensor durch die Druckkammer zu dem Kolben oder einer Kolbenstange. An dem Kolben oder der Kolbenstange wird das Sensorsignal reflektiert. Nach der Reflektion gelangt das Sensorsignal wieder durch die Druckkammer zu dem Kolbenbewegungssensor, wo dieses ausgewertet wird, wobei insbesondere eine Ermittlung der Kolbenbewegung, beispielsweise eines Hubs, durch die Laufzeitveränderung des Sensorsignals je nach Stellung des Kolbens oder der Kolbenstange erfolgt. Insoweit kann die Kolben-Zylinder-Einheit auch gemäß dem eingangs angeführten Stand der Technik in den unterschiedlichen Varianten ausgebildet sein.

Die Erfindung basiert auf der Erkenntnis, dass bei der aus der Druckschrift EP 3 957 868 A1 bekannten Ausführungsform das Gehäuse des Kolbenbewegungssensors von den hohen fluidischen Drücken, die bis hin zu 600 bar und mehr betragen können, beaufschlagt ist, was eine entsprechende Dimensionierung des Gehäuses und eine geeignete Wahl eines Materials des Gehäuses erfordert. Des Weiteren akzeptiert die aus der Druckschrift EP 3 957 868 A1 bekannte Ausführungsform, dass bei der Montage des Gehäuses des Kolbenbewegungssensors aus der Querbohrung eine Verbindung der mit dem Fluid gefüllten Druckkammer mit der Umgebung geschaffen wird, was zu einer Entleerung der Druckkammer führen kann. Aus diesem Grund schlägt EP 3 957 868 A1 vor, dass das über beidseits eines Sensorsignalkanals, der die Querbohrung und die Druckkammer miteinander verbindet, angeordnete Dichtringe in der Querbohrung abgedichtete Gehäuse immer in der Querbohrung verbleiben soll, um eine Entleerung der Druckkammer auszuschließen. Durch eine geeignete Gestaltung der elektronischen Baueinheit des Kolbenbewegungssensors und des Gehäuses des Kolbenbewegungssensors soll aber ermöglicht werden, dass die elektronische Baueinheit bei in der Querbohrung angeordnetem Gehäuse aus dem Gehäuse und der Querbohrung entnommen werden kann.

Die Erfindung schlägt vor, dass die Querbohrung (und damit auch der in der Querbohrung angeordnete Kolbenbewegungssensor) fluidisch von der Druckkammer getrennt ist, so dass die Querbohrung nicht mit dem Fluid in der Druckkammer beaufschlagt wird und die Drücke des Fluids nicht auf das Gehäuse des Kolbenbewegungssensors wirken und bei der Entnahme des Gehäuses des Kolbenbewegungssensors (u. U. gemeinsam mit der elektronischen Baueinheit) dennoch weiterhin eine Abdichtung der Druckkammer gewährleistet ist, so dass das Fluid nicht aus der Druckkammer über die Querbohrung in die Umgebung austreten kann. Um dennoch die Übertragung des Sensorsignals zwischen dem Kolbenbewegungssensor und der Druckkammer, dem Kolben und der Kolbenstange zu ermöglichen, ist das für die fluidische Trennung verantwortliche und im Bereich des Strahlengangs des Sensorsignals angeordnete Trennelement geeignet ausgebildet, um das Sensorsignal (mit einer hinreichend kleinen Dämpfung und/oder einer hinreichend kleinen Streuung oder unerwünschten Umlenkung) durchzulassen. Das Trennelement gewährleistet somit die Funktionen einerseits der fluidischen Trennung und andererseits der Übertragung oder des Durchlassens des Sensorsignals.

Für die fluidische Trennung oder das hierfür eingesetzte Trennelement gibt es im Rahmen der Erfindung vielfältige Möglichkeiten. So kann beispielsweise die Trennung über eine Wandung zwischen der Querbohrung und der Druckkammer, die von dem Zylinderkopf ausgebildet ist, erfolgen. Möglich ist aber auch, dass die Querbohrung und die Druckkammer durch einen Sensorsignalkanal, durch welchen das Sensorsignal hindurchtritt, miteinander verbunden sind. In diesem Fall kann ein Trennelement in dem Sensorsignalkanal angeordnet sein und dort die fluidische Trennung gewährleisten.

Für einen besonderen Vorschlag der Erfindung ist die Querbohrung über ein Dichtelement fluidisch von der Druckkammer getrennt. Beispielsweise kann das Dichtelement den zuvor genannten Sensorsignalkanal fluidisch abtrennen.

Für einen besonderen Vorschlag der Erfindung gelangt das Sensorsignal durch eine elektrische Linse oder einen Kollimator von dem Kolbenbewegungssensor zu der Druckkammer und/oder nach der Reflektion an dem Kolben oder der Kolbenstange von der Druckkammer zu dem Kolbenbewegungssensor. Die dielektrische Linse oder der Kollimator dient dabei der Ausrichtung und/oder Bündelung des Sensorsignals (vgl. auch die einleitende Zusammenfassung der Druckschrift EP 3 957 868 A1 sowie die Ausführungen zu der dielektrischen Linse oder dem Kollimator in dieser Druckschrift selber). Die dielektrische Linse oder der Kollimator ist in einem Sensorsignalkanal angeordnet. In diesem Fall ist das Dichtelement zwischen der dielektrischen Linse oder dem Kollimator und dem Sensorsignalkanal angeordnet. Die Trennung zwischen der Druckkammer und der Querbohrung erfolgt für dieses Ausführungsbeispiel somit gemeinsam einerseits durch die dielektrische Linse oder den Kollimator und andererseits durch das Dichtelement. Die dielektrische Linse oder der Kollimator sind dabei multifunktional eingesetzt, da diese einerseits die Beeinflussung des Strahlengangs des Sensorsignals gewährleisten und andererseits (gemeinsam mit dem Dichtelement) die angestrebte fluidische Trennung gewährleistet. Um lediglich ein, die Erfindung nicht beschränkendes Beispiel zu nennen, kann die dielektrische Linse oder der Kollimator im Bereich seines Außenumfangs eine umlaufende Nut aufweisen, in welcher das Dichtelement, beispielsweise ein O-Ring, aufgenommen ist. Das Dichtelement ist dann zur Abdichtung zwischen der dielektrischen Linse oder dem Kollimator und der Innenfläche des Sensorsignalkanals radial verspannt.

Eine weitere erfindungsgemäße Ausgestaltung basiert insbesondere auf der Erkenntnis, dass für die erforderliche Genauigkeit der Messergebnisse des in der Querbohrung angeordneten Kolbenbewegungssensors entscheidend ist, dass sich der Kolbenbewegungssensor und damit die Sende- und/oder Empfangseinheit für die hochfrequente Strahlung (oder ein anderes Sensorsignal)
- sowohl in der vorbestimmten Position in der Querbohrung, die die axiale Position des Kolbenbewegungssensors entlang der Längsachse der Querbohrung beschreibt,
- als auch in der vorbestimmten Ausrichtung. die die Drehstellung des Kolbenbewegungssensors um die Längsachse der Querbohrung und damit die Richtung der Aussendung des Signals des Kolbenbewegungssensors beschreibt,
befindet. Dies erfordert für die aus dem Stand der Technik bekannten Ausführungsformen einen erhöhten Aufwand einerseits bei der Fertigung hinsichtlich der Fertigungstoleranzen und andererseits bei der Montage des Kolbenbewegungssensors in der Querbohrung des Zylinderkopfs.

Möglich ist auch, dass für den Fall, dass gemäß dem Stand der Technik in einer Baureihe von Kolben-Zylinder-Einheiten mit unterschiedlichen Abmessungen (insbesondere unterschiedlichen Durchmessern des Zylinderrohrs und damit Dimensionen des Zylinderkopfs) Kolbenbewegungssensoren und insbesondere Sensorgehäuse mit unterschiedlichen Dimensionen hergestellt werden müssen. Grund hierfür ist, dass die unterschiedlichen Dimensionen der Kolben-Zylinder-Einheiten unterschiedliche Abstände des Sensorsignalkanals im Inneren des Zylinderkopfs von dem Anschlussstecker an der Außenfläche des Zylinderkopfs zur Folge haben, was unterschiedliche Längen des Sensorgehäuses bedingt.

In diesem Spannungsfeld schlägt die Erfindung vor, dass ein Positionier- und/oder Ausrichtelement Einsatz finden kann. Das Positionier- und/oder Ausrichtelement gewährleistet die richtige Positionierung des Kolbenbewegungssensors in Richtung der Längsachse der Querbohrung, so dass mittels der Positionierung Sorge dafür getragen wird, dass das Hochfrequenzsignal des Kolbenbewegungssensors an der richtigen Stelle durch den Sensorsignalkanal, einen etwaigen Kollimator und die Druckkammer hindurchtritt und/oder an der richtigen Stelle auf die Stirnseite des Kolbens oder der Kolbenstange auftrifft. Mittels des Positionier- und/oder Ausrichtelements kann alternativ oder kumulativ auch die Ausrichtung des Kolbenbewegungssensors vorgegeben werden. Findet das Positionier- und/oder Ausrichtelement kumulativ zum Positionieren und Ausrichten des Kolbenbewegungssensors Einsatz, kann auf einfache und zuverlässige Weise gewährleistet werden, dass eine Abweichung der Position und Ausrichtung eines gesendeten Hochfrequenzsignals des Kolbenbewegungssensors innerhalb eines vorbestimmten kleinen Toleranzbereichs liegt.

Für diesen Vorschlag ist das Positionier- und/oder Ausrichtelement in der Querbohrung angeordnet und hierbei in Richtung der Längsachse der Querbohrung, nämlich in die Montagerichtung, in der Querbohrung abgestützt. Diese Abstützung kann beispielsweise an einer Querfläche, Schrägfläche, einer Stufe, Verjüngung oder einem Ringbund der Querbohrung erfolgen. Damit nimmt das Positionier- und/oder Ausrichtelement eine definierte axiale Position in der Querbohrung ein, die bereits bei der Herstellung der Querbohrung, nämlich bei der Herstellung der Querfläche, Schrägfläche, Stufe, Verjüngung oder des Ringbunds, vorgegeben werden kann.

An dem Positionier- und/oder Ausrichtelement ist dann der Kolbenbewegungssensor in Richtung der Längsachse an dem Positionier- und/oder Ausrichtelement abgestützt. Da das Positionier- und/oder Ausrichtelement in der Querbohrung eine definierte axiale Position einnimmt, kann über die Abstützung des Kolbenbewegungssensors an dem Positionier- und/oder Ausrichtelement gewährleistet werden, dass auch der Kolbenbewegungssensor eine definierte Position in der Querbohrung einnimmt.

Vorteilhaft ist, dass für den Fall, dass derselbe Kolbenbewegungssensor verwendet wird für Kolben-Zylinder-Einheiten unterschiedlicher Dimensionen, derselben Kolbenbewegungssensor in den unterschiedlichen Kolben-Zylinder-Einheiten Einsatz finden kann, wobei dann aber eine Anpassung der vorbestimmten Position des Kolbenbewegungssensors in der Querbohrung dadurch erfolgen kann, dass das Positionier- und/oder Ausrichtelement unterschiedliche Längen aufweist.

Wie zuvor erwähnt, kann die Abstützung des Positionier- und/oder Ausrichtelements durch eine beliebige Querfläche, Schrägfläche, Stufe, Verjüngung oder einen Ringbund u. ä. der Querbohrung gewährleistet werden. Für einen besonders einfachen Vorschlag der Erfindung kann die Querbohrung als Sacklochbohrung ausgebildet sein, wobei dann das Positionier- und/oder Ausrichtelement an einem Boden (insbesondere dem Randbereich eines kegelförmigen Bodens) der Sacklochbohrung abgestützt sein. In diesem Fall kann durch die Tiefe der Sacklochbohrung die Position des Positionier- und/oder Ausrichtelements und damit auch des Kolbenbewegungssensors vorgegeben werden.

Möglich ist, dass eine Ausrichtung des Positionier- und/oder Ausrichtelements um die Längsachse der Querbohrung vorgegeben ist. Dies kann beispielsweise durch einen Formschluss der Querschnitte des Gehäuses des Positionier- und/oder Ausrichtelements und der Querbohrung erfolgen. So kann beispielsweise die Querbohrung eine in Richtung der Längsachse verlaufende Nut oder Ausnehmung (oder eine Rippe oder einen Vorsprung) aufweisen, die oder der formschlüssig zusammenwirkt mit einer Rippe oder einem Vorsprung (oder einer Nut oder Ausnehmung) des Gehäuses des Positionier- und/oder Ausrichtelements. Möglich ist aber auch, dass die Ausrichtung des Positionier- und/oder Ausrichtelements dadurch gewährleistet wird, dass eine dem Boden der Querbohrung zugewandte Stirnseite des Gehäuses des Positionier- und/oder Ausrichtelements eine exzentrische Ausnehmung (oder einen Vorsprung) aufweist, der eingreift in einen entsprechenden Vorsprung (oder eine Ausnehmung) des Bodens.

Ein weiterer Aspekt der Erfindung widmet sich der Sicherung des Positionier- und/oder Ausrichtelements innerhalb der Querbohrung. Vorgeschlagen wird, dass mindestens ein Sicherungselement vorhanden ist. Das Sicherungselement dient zur Sicherung der Längsposition des Positionier- und/oder Ausrichtelements in der Querbohrung. Somit dient das Sicherungselement der Gewährleistung, dass sowohl das Positionier- und/oder Ausrichtelement als auch der Kolbenbewegungssensor an ihrer vorbestimmten Position sind und auch in Betrieb bleiben. Alternativ oder kumulativ möglich ist, dass mittels des mindestens einen Sicherungselements eine Sicherung der Ausrichtung des Positionier- und/oder Ausrichtelements um die Längsachse der Querbohrung (und damit u. U. auch eine Sicherung der Ausrichtung des Kolbenbewegungssensors) erfolgt.

Für die Art der Ausgestaltung des Sicherungselements gibt es vielfältige Möglichkeiten. So kann beispielsweise ein Sicherungsbolzen, ein Sicherungssplint, eine Rastverbindung, eine Nut-Federverbindung zur Sicherung einer Ausrichtung, usw. Einsatz finden. Für eine sehr einfache Ausführungsform ist das Sicherungselement eine Schraube. Die Schraube kann sich dabei parallel zur Längsachse der Querbohrung erstrecken. Möglich ist beispielsweise, dass sich die Schraube durch eine Bohrung von der anderen Seite durch den Boden der Sacklochbohrung erstreckt. Möglich ist aber auch, dass sich eine Schraube, die das Sicherungselement bildet, radial zu einer Längsachse der Querbohrung erstreckt. In jedem Fall ist die Schraube von außen an dem Zylinderkopf zugänglich und erstreckt sich durch eine Bohrung bis zu dem Positionier- und/oder Ausrichtelement, wo dann die Schraube mit einem Innengewinde des Positionier- und/oder Ausrichtelements verschraubt ist. Möglich ist des Weiteren, dass das Positionier- und/oder Ausrichtelement sowohl eine stirnseitige Gewindebohrung aufweist, die genutzt wird, wenn sich die Schraube parallel zur Längsachse der Querbohrung erstreckt, als auch eine radial orientierte Gewindebohrung aufweist für eine Montage in dem Fall, dass sich die Schraube radial zur Längsachse der Querbohrung erstreckt.

Das Positionier- und/oder Ausrichtelement und der Kolbenbewegungssensor liegen vorzugsweise über Kontaktflächen unmittelbar aneinander an. Diese Kontaktflächen können die richtige Positionierung des Kolbenbewegungssensors in Richtung der Längsachse der Querbohrung gewährleisten.

Möglich ist, dass nicht nur die axiale Position des Kolbenbewegungssensors in der Querbohrung vorgegeben werden muss. Vielmehr kann auch erforderlich sein, dass eine Ausrichtung des Kolbenbewegungssensors hinsichtlich seines Drehwinkels um die Längsachse der Querbohrung vorgegeben werden muss. Die Vorgabe des Drehwinkels kann bspw. erforderlich sein, damit ein von dem Kolbenbewegungssensor ausgesendetes Sensorsignal durch einen Sensorsignalkanal hindurchtreten und/oder an einer definierten Stelle und/oder unter einer definierten Ausrichtung auf eine Stirnfläche des Kolbens oder der Kolbenstange auftreffen kann. Diese Ausrichtung kann beispielsweise dadurch vorgegeben werden, dass der Kolbenbewegungssensor formschlüssig in Umfangsrichtung mit der Querbohrung zusammenwirkt, sodass einerseits über den Formschluss die Ausrichtung vorgegeben ist und andererseits hierdurch eine derart vorgegebene Ausrichtung auch im Betrieb aufrechterhalten wird. Beispielsweise kann die Querbohrung eine in Richtung der Längsachse verlaufende Nut oder eine Ausnehmung aufweisen, in welche(r) dann ein Vorsprung oder eine Rippe des Gehäuses des Kolbenbewegungssensors angeordnet ist. Umgekehrt möglich ist, dass die Querbohrung eine in Richtung der Längsachse verlaufende Rippe oder einen Vorsprung aufweist, der eingreift in eine Nut oder Ausnehmung des Gehäuses des Kolbenbewegungssensors. Möglich ist auch, dass die Querbohrung einerseits und das Gehäuse des Kolbenbewegungssensors andererseits korrespondierende nicht runde, bspw. elliptische Querschnitte aufweisen, die ein passgenaues Einsetzen in der zutreffenden Ausrichtung gewährleisten.

Für einen Vorschlag der Erfindung sind die Kontaktflächen des Positionier- und/oder Ausrichtelements einerseits und des Kolbenbewegungssensors andererseits über einen Formschluss in Umfangsrichtung um die Längsachse der Querbohrung miteinander verbunden. Dieser Formschluss schränkt dann die möglichen relativen Ausrichtungen des Kolbenbewegungssensors einerseits und des Positionier- und/oder Ausrichtelements (im Folgenden Kontaktelemente) andererseits ein oder gibt diese sogar vor. Für diesen Formschluss gibt es vielfältige Möglichkeiten. Um lediglich einige, die Erfindung nicht beschränkende Beispiele zu nennen, kann eines der beiden Kontaktelemente einen Vorsprung aufweisen, der in eine Vertiefung des anderen Kontaktelements eingreift. Möglich ist auch, dass eine Stirnfläche eines Kontaktelements eine Stufe aufweist, die formschlüssig in Wechselwirkung tritt mit einer entsprechenden Stufe des anderen Kontaktelements zur Gewährleistung der Verdrehsicherung und Vorgabe der Ausrichtung.

Ein weiterer Aspekt der Erfindung widmet sich der Ermöglichung einer Demontage des Kolbenbewegungssensors, die beispielsweise erfolgen kann zu Wartungszwecken, im Fall eines Defektes des Kolbenbewegungssensors, zu Reinigungszwecken oder zum Einsatz eines anderen Kolbenbewegungssensors mit einem anderen Messbereich oder einer anderen Messgenauigkeit. In diesem Fall ist vorteilhaft, wenn der Kolbenbewegungssensor lösbar an dem Positionier- und/oder Ausrichtelement gehalten ist, aber dennoch die Verbindung eine gewisse Haltekraft gewährleistet. Vorteilhaft ist dabei, wenn für die Demontage lediglich eine Demontagekraft aufgebracht werden muss, die einen Schwellwert der Haltekraft der Verbindung überschreitet.

Für eine Ausgestaltung der Erfindung erfolgt eine Verbindung des Kolbenbewegungssensors mit dem Positionier- und/oder Ausrichtelement über eine Rastverbindung. In diesem Fall gibt die Rastkraft der Rastverbindung den Schwellwert für die Haltekraft vor - bringt der Monteur eine Demontagekraft auf den Kolbenbewegungssensor auf, die größer ist als die Rastkraft, kann die Rastverbindung gelöst werden und der Kolbenbewegungssensor von dem Positionier- und/oder Ausrichtelement demontiert werden und aus der Querbohrung entnommen werden.

Für eine andere Ausführungsform findet ein Permanentmagnet Einsatz, der eine magnetische Haltekraft zwischen dem Kolbenbewegungssensor und dem Positionier- und/oder Ausrichtelement erzeugt. Für die Demontage ist in diesem Fall der Schwellwert für die Haltekraft vorgegeben durch die Magnetkraft. Im Rahmen der Erfindung ist auch möglich, dass jeweils der Kolbenbewegungssensor und das Positionier- und/oder Ausrichtelement einen Permanentmagneten aufweisen, zwischen denen dann die Magnetkraft erzeugt wird.

Für die Demontage kann der Monteur die erforderliche Demontagekraft auf beliebige Weise aufbringen. Für einen Vorschlag der Erfindung weist der Kolbenbewegungssensor im Bereich einer Stirnseite auf der Seite, die dem Positionier- und/oder Ausrichtelement abgewandt ist, einen Demontage-Mitnehmer auf. Der Demontage-Mitnehmer ist mit einem Demontagewerkzeug koppelbar. Hierbei kann über das Demontagewerkzeug und den Demontage-Mitnehmer die erforderliche Demontagekraft auf den Kolbenbewegungssensor aufgebracht werden. Beispielsweise kann der Demontage-Mitnehmer als eine Art Hakenverbindung ausgebildet sein, in die ein gegenhakendes Demontagewerkzeug eingehakt wird, der Demontage-Mitnehmer und das Demontagewerkzeug können eine Rastverbindung ausbilden oder der Demontage-Mitnehmer und das Demontagewerkzeug sind über einen Permanentmagneten miteinander verbindbar sein. Für einen besonderen Vorschlag der Erfindung ist der Demontage-Mitnehmer ein Innengewinde des Kolbenbewegungssensors. In dieses Innengewinde kann dann ein Demontagestab eingeschraubt werden, so dass dann über den nach dem Einschrauben aus der Querbohrung herausragenden Demontagestab die erforderlichen Demontagekräfte auf den Kolbenbewegungssensor aufgebracht werden können.

Hierbei kann das Innengewinde von einem Vollmaterial des Sensorgehäuses ausgebildet sein. Für einen Vorschlag der Erfindung ist das Innengewinde von einem Gewindeeinsatz ausgebildet. Dieser Gewindeeinsatz kann dann in ein Sensorgehäuse des Kolbenbewegungssensors eingespritzt sein oder in eine Bohrung des Sensorgehäuses eingepresst sein. Der Einsatz eines derartigen Gewindeeinsatzes ist beispielsweise dann von Vorteil, wenn das Sensorgehäuse aus einem Material hergestellt ist, bei dem die Herstellung eines Innengewindes nicht die erforderliche Festigkeit zur Verfügung stellt. In diesem Fall kann für das Material des Gewindeeinsatzes ein festeres Material, insbesondere Metall, gewählt werden. Das festere Material kann dann im Bereich des Gewindes die erforderliche Festigkeit für die Gewindeverbindung bereitstellen. Andererseits kann der Gewindeeinsatz eine vergrößerte Außenfläche aufweisen, die dann eine großflächige Anbindung und Kraftübertragung an das Sensorgehäuse ermöglicht.

Grundsätzlich möglich ist, dass ein Anschlussstecker unmittelbar von dem Sensorgehäuse ausgebildet oder an diesem gehalten ist und nach außen aus der Querbohrung und dem Zylinderkopf herausragt, wo dann der Anschlussstecker mit den erforderlichen Anschlusskabeln verbunden werden kann. Für einen Vorschlag der Erfindung ist der Kolbenbewegungssensor über ein Sensorkabel mit einem Gehäusestecker verbunden. Somit verfügt die Sensoreinheit über zwei Teileinheiten, nämlich den Kolbenbewegungssensor und den Gehäusestecker, die über das Sensorkabel flexibel miteinander verbunden sind. Die Verbindung über das Sensorkabel ermöglicht auf einfache Weise eine Anpassung für die Verwendung desselben Kolbenbewegungssensors und desselben Gehäusesteckers für Kolben-Zylinder-Einheiten mit unterschiedlichen Dimensionen, indem für die unterschiedlichen Einbausituationen dann das Sensorkabel mehr oder weniger gekrümmt oder gestreckt eingebaut werden kann. Andererseits kann unter Umständen das Sensorgehäuse weniger massiv oder kürzer ausgebildet sein, da das Sensorgehäuse nicht den gesamten radialen Bereich von dem eigentlichen Messbereich bis hin zu dem Anschlussstecker überbrücken muss, sondern ein Teilbereich von dem Sensorkabel überbrückt werden kann.

Besonders vorteilhaft ist, wenn das Sensorkabel lösbar mit dem Kolbenbewegungssensor und/oder dem Gehäusestecker verbunden ist. Dies ermöglicht beispielsweise eine separate Montage zunächst nur des Kolbenbewegungssensors, dann den Anschluss des Sensorkabels und schließlich die Montage des Gehäusesteckers, wobei auch eine entsprechende separate Demontage erfolgen kann. Des Weiteren ist möglich, dass, beispielsweise zu Wartungszwecken oder im Fall eines Defektes lediglich ein Kolbenbewegungssensor oder ein Gehäusestecker ausgewechselt werden muss, während dann das verbleibende Teil von dem Kolbenbewegungssensor und dem Gehäusestecker weiter verwendet werden kann.

Für einen besonderen Vorschlag der Erfindung wird aber durch die lösbare Verbindung mit dem Sensorkabel auch ermöglicht, dass derselbe Kolbenbewegungssensor mit unterschiedlichen Gehäusesteckern verwendet werden kann, um eine Anpassung an unterschiedliche Einsatzzwecke zu ermöglichen, die unterschiedliche Gehäusestecker bedingen.

Vorteilhaft ist auch, wenn der Gehäusestecker lösbar mit dem Zylinderkopf verbunden ist. Für einen Vorschlag der Erfindung verfügt zu diesem Zweck der Gehäusestecker über einen Flansch. Der Flansch kann dann mit dem Zylinderkopf verschraubt werden, was eine zuverlässige Verbindung zwischen Gehäusestecker und Zylinderkopf ermöglicht.

Möglich ist dabei sogar, dass der Flansch in unterschiedlichen Ausrichtungen des Gehäusesteckers um die Längsachse der Querbohrung mit dem Zylinderkopf verschraubt werden kann, womit den jeweiligen Einbaubedingungen Rechnung getragen werden kann.

Möglich ist, dass im Rahmen der Erfindung beliebige unterschiedliche Gehäusestecker Einsatz finden. So können einerseits die Gehäusestecker eine unterschiedliche Form aufweisen. Möglich ist, dass ein erster Gehäusestecker geradlinig ausgebildet ist, während ein zweiter, im Rahmen der Erfindung einsetzbarer Gehäusestecker L-förmig ausgebildet ist. In diesem Fall kann der Gehäusestecker zwei abgewinkelte Schenkel aufweisen. Ein Schenkel erstreckt sich dann in das Innere der Querbohrung des Zylinderkopfs. Im Bereich einer Stirnseite dieses Schenkels kann dann ein Anschluss des Sensorkabels erfolgen. Hingegen erstreckt sich der andere Schenkel außenliegend von dem Zylinderkopf. Dabei ist möglich, dass sich dieser Schenkel radial zu der Längsachse der Querbohrung erstreckt. Für eine Einbausituation ist der Schenkel parallel zur Längsmittelachse des Zylinders der Kolben-Zylinder-Einheit orientiert, was für einige Einsatzzwecke vorteilhaft ist. In diesem Fall kann die Stirnseite des letztgenannten Schenkels zum Anschluss eines Anschlusskabels dienen.

Neben der Nutzung von Gehäusesteckern unterschiedlicher Formen in der erfindungsgemäßen Kolben-Zylinder-Einheit können die Gehäusestecker alternativ oder kumulativ auch mit unterschiedlichen Anschlussgeometrien und Belegungen der Pins ausgestattet sein.
a) Möglich ist hierbei beispielsweise, dass ein erster Typ eines Gehäusesteckers als sogenannter DIN-Stecker ausgebildet ist. Beispielsweise kann es sich um einen DIN-Stecker M12 handeln, der 5-polig ausgebildet sein kann. Derartige DIN-Stecker sind in den Normen DIN 41524 (3- und 5-polig), DIN 45322 (5-polig mit 60° Abstand), DIN 45326 (8-polig) und DIN 45329 (7-polig) (diese Normen ersetzt durch EN 60130-9) beschrieben.
   Für diesen ersten Typ des Gehäusesteckers können dann wiederum unterschiedliche Untertypen verwendet werden, die sich durch die Belegung der Anschlusspins unterscheiden:
   aa) Für einen ersten Untertyp ist ein erster Pin nicht belegt. Ein zweiter Pin ist mit der Funktion VDC (Spannungsversorgung des Kolbenbewegungssensors) belegt. Ein dritter Pin ist mit der Funktion GND (Erde) belegt. Ein vierter Pin ist mit dem Datenbus CAN HI belegt, während ein fünfter Pin mit einem Datenbus CAN LO belegt ist.
   ab) Für einen zweiten Untertyp des ersten Typs kann ein erster Pin nicht belegt sein, ein zweiter Pin mit VDC belegt sein, ein dritter Pin mit GND belegt sein, ein vierter Pin mit einem pulsweitenmodulierten Signal belegt sein und ein fünfter Pin nicht belegt sein.
b) Für einen zweiten Typ des Gehäusesteckers ist der Gehäusestecker als sogenannter Deutsch-Stecker ausgebildet, wobei es sich beispielsweise um einen Deutsch-Stecker DT 04 handeln kann mit vier Pins.
   Auch für den zweiten Typ sind unterschiedliche Untertypen möglich:
   ba) So kann beispielsweise ein erster Untertyp des zweiten Typs mit einem ersten Pin ausgestattet sein, der die Funktion VDC gewährleistet. Der zweite Pin ist mit der Funktion CAN LO belegt, ein dritter Pin mit der Funktion GND sowie ein vierter Pin mit der Funktion CAN HI.
   bb) Hingegen kann für einen zweiten Untertyp des zweiten Typs ein erster Pin mit der Funktion VDC belegt sein, ein zweiter Pin mit der Funktion GND belegt sein, ein dritter Pin mit der Funktion PWM belegt sein und ein vierter Pin nicht belegt sein.

Erfindungsgemäß ist ermöglicht, dass ein- und derselbe Kolbenbewegungssensor über das lösbare Sensorkabel je nach Anforderungen und Einsatzzweck wahlweise mit Gehäusesteckern unterschiedlicher Geometrien und Abwinklungen der Schenkel des Gehäusesteckers und/oder Gehäusesteckern der unterschiedlichen genannten Typen und Untertypen kombiniert werden können.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem Längsschnitt eine Kolben-Zylinder-Einheit gemäß dem Stand der Technik.
- **Fig. 2**: zeigt in einem Teillängsschnitt eine Kolben-Zylinder-Einheit im Bereich des Zylinderkopfs.
- **Fig. 3**: zeigt in einer räumlichen Explosionsansicht den Zylinderkopf gemäß Fig. 2 mit zugeordneten Bauelementen.
- **Fig. 4**: zeigt in einer räumlichen Ansicht einen Kolbenbewegungssensor und ein Positionier- und/oder Ausrichtelement.
- **Fig. 5**: zeigt in einer räumlichen Ansicht einen Gehäusestecker des Typs DIN-Stecker (5polig) mit Sensorkabel.
- **Fig. 6**: zeigt den Gehäusestecker mit Sensorkabel gemäß Fig. 5 in einer Seitenansicht.
- **Fig. 7**: zeigt in einer räumlichen Ansicht einen Gehäusestecker des Typs Deutsch-Stecker (4-polig) mit Sensorkabel.
- **Fig. 8**: zeigt den Gehäusestecker gemäß Fig. 7 in einer Seitenansicht.

### FIGURENBESCHREIBUNG

Sofern sich aus dem Folgenden nichts anderes ergibt, kann für die erfindungsgemäßen Ausführungsformen das eingangs zu dem Stand der Technik und zu der Ausführungsform gemäß Fig. 1 Gesagte entsprechend gelten, wobei auch die weitere Offenbarung in den Druckschriften DE 10 2019 122 121 A1 und EP 3 957 868 A1 im Rahmen der Erfindung einsetzbar ist.

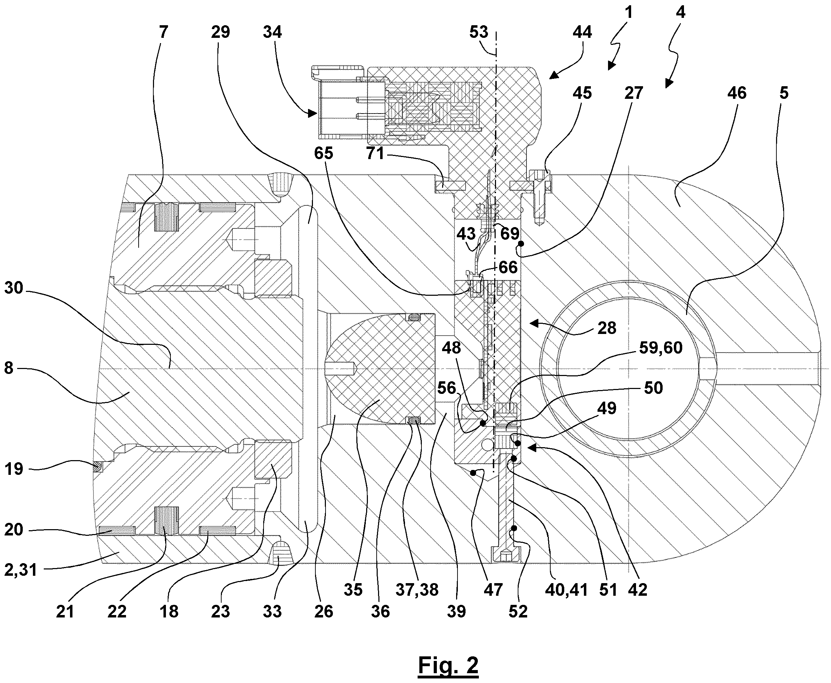

**Fig. 2** zeigt eine Kolben-Zylinder-Einheit 1 im Bereich des Zylinderkopfs 4. In die Druckkammer 33 der Kolben-Zylinder-Einheit 1 mündet ein Sensorsignalkanal 26. In dem Sensorsignalkanal 26 ist ein Kollimator 35 angeordnet. Der Kollimator 35 verfügt auf der dem Kolbenbewegungssensor 28 zugewandten Seite über eine ebene Stirnseite, die quer zu der Längsmittelachse 30 orientiert ist. Hinsichtlich der Längsmittelachse 30 ist der Kollimator 35 auf der anderen Seite rotationssymmetrisch ausgebildet, wobei der Kollimator 35 beispielsweise wie dargestellt einen kurvenförmigen und insbesondere parabelförmigen Längsschnitt aufweisen kann. Der Kollimator 35 verfügt über eine Ringnut 36, in der ein Dichtelement 37, hier ein O-Ring 38, angeordnet ist. Das Dichtelement 37 gewährleistet eine hydraulische Abdichtung zwischen der Innenwandung des Sensorsignalkanals 26 und dem Kollimator 35. Der Sensorsignalkanal 26 verfügt über einen hier umlaufenden Absatz 39. Ist die Druckkammer 33 mit einem Hydraulikdruck beaufschlagt, führt der auf die ballige, dem Kolben 7 zugewandte Stirnseite wirkende Hydraulikdruck zu einer Hydraulikkraft, die den Kollimator 35 gegen den Absatz 39 presst. Durch diese Anpressung des Kollimators 35 an den Absatz 39 und/oder die Wirkung des Dichtelements 37 kann gewährleistet werden, dass die Querbohrung 27 nicht mit Hydraulikfluid beaufschlagt wird und somit in der Querbohrung 27 keine zusätzlichen Dichtmaßnahmen zu treffen sind. Andererseits ermöglicht diese Abdichtung, dass eine Demontage des Kolbenbewegungssensors 28 möglich ist, ohne dass Hydraulikfluid aus der Querbohrung 27 austreten kann.

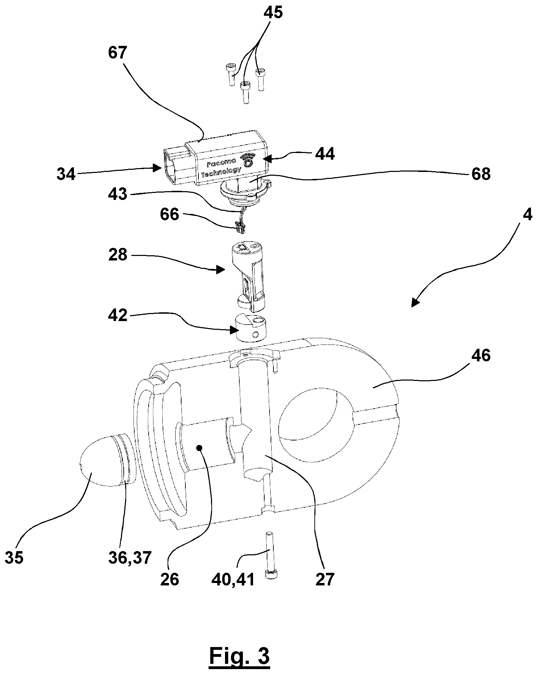

Wie aus der Explosionsdarstellung in **Fig. 3** ersichtlich ist, sind in der Querbohrung ein Sicherungselement 40 in Form einer Schraube 41, ein Positionier- und/oder Ausrichtelement 42, der Kolbenbewegungssensor 28, ein Sensorkabel 43 und ein Gehäusestecker 44 montiert, wobei der Gehäusestecker 44 über Befestigungsschrauben 45 an einem Gehäuse 46 des Zylinderkopfs 4 befestigt ist.

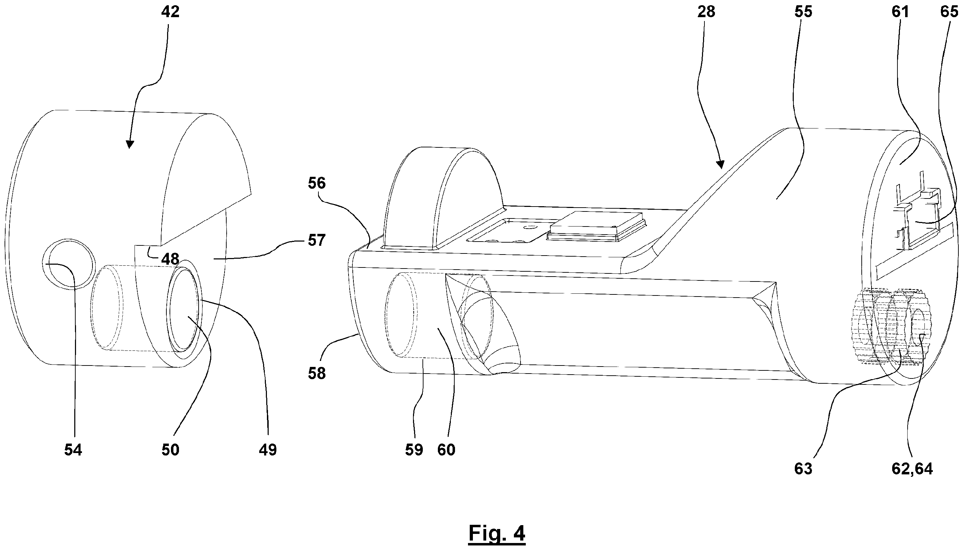

Gemäß **Fig. 4** ist das Positionier- und/oder Ausrichtelement 42 zylindrisch ausgebildet mit einem Durchmesser derart, dass das Positionier- und/oder Ausrichtelement 42 passgenau in die Querbohrung 27 eingesetzt werden kann. Die Unterseite des Positionier- und/oder Ausrichtelements 42 ist für das dargestellte Ausführungsbeispiel eben ausgebildet. Die Unterseite des Positionier- und/oder Ausrichtelements 42 liegt an einem Boden 47 der Querbohrung 27, die hier als Sacklochbohrung ausgebildet ist, an.

Auf der dem Kolbenbewegungssensor 28 zugewandten Seite ist das Positionier- und/oder Ausrichtelement 42 grundsätzlich eben, aber mit einer Stufe 48 ausgebildet. Auf dieser Seite verfügt das Positionier- und/oder Ausrichtelement 42 über eine (hier zylindrische) Aufnahme 49, in der ein Permanentmagnet 50 aufgenommen ist, der mit der Aufnahme 49 verklebt sein kann oder in diese eingepresst ist. Die Außenfläche des Permanentmagneten 50 ist dabei bündig zu einer Teilfläche der Stirnseite des Positionier- und/oder Ausrichtelement 42 abseits der Stufe 48 angeordnet.

Auf der dem Kolbenbewegungssensor 28 abgewandten Seite verfügt das Positionier- und/oder Ausrichtelement 42 über eine exzentrisch zu der Längsachse 53 der Querbohrung 27 angeordnetes Innengewinde 51. In der ausgerichteten, in die Querbohrung 27 eingebauten Stellung des Positionier- und/oder Ausrichtelements 42 fluchtet das Innengewinde 51 des Positionier- und/oder Ausrichtelements 42 mit einer in die Querbohrung 27 mündenden exzentrischen Bohrung 52, durch die sich die Schraube 41 von außen durch das Gehäuse 46 erstreckt. Auf diese Weise ist das Positionier- und/oder Ausrichtelement 42 in der richtigen Position und Ausrichtung fixiert.

Möglich ist, dass das Positionier- und/oder Ausrichtelement 42 auch eine Querbohrung 54, ggf. mit einem Innengewinde, aufweist, Ist nicht wie in Fig. 2 dargestellt eine Bohrung 52 vorhanden oder genutzt, die parallel zu der Längsachse 53 der Querbohrung 27 orientiert ist, sondern vielmehr in dem Gehäuse 46 eine Bohrung vorgesehen, die vertikal zur Zeichenebene gemäß Fig. 2 orientiert ist, kann alternativ zu der Befestigung über die Schraube 41 eine Befestigung des Positionier- und/oder Ausrichtelements 42 über eine Schraube erfolgen, die sich vertikal zur Zeichenebene gemäß Fig. 2 durch das Gehäuse 46 erstreckt und in dem innenliegenden Endbereich mit der Querbohrung 54 des Positionier- und/oder Ausrichtelements 42 verschraubt ist.

Der Kolbenbewegungssensor 28 verfügt über ein Sensorgehäuse 55, dessen Außengeometrie zylindrisch ist mit einem Durchmesser derart, dass das Sensorgehäuse 55 passgenaue Aufnahme in der Querbohrung 27 finden kann. Gegenüber diese Außengeometrie verfügt das Sensorgehäuse 25 über Rücksprünge, im Bereich welcher die Elektronikbaueinheit und die Sende- und/oder Empfangseinheit für das Hochfrequenzsignal angeordnet sind.

Auf der dem Positionier- und/oder Ausrichtelement 42 zugewandten Seite verfügt das Sensorgehäuse 55 über eine Stufe 56, die entsprechend der Stufe 48 des Positionier- und/oder Ausrichtelements 42 ausgebildet ist. Abseits der Stufen 48, 56 bilden das Positionier- und/oder Ausrichtelement 42 und das Sensorgehäuse 55 quer zur Längsachse 53 orientierte Kontaktflächen 57, 58, im Bereich welcher diese Bauelemente in Richtung der Längsachse 53 aneinander anliegen, womit die axiale Position des Kolbenbewegungssensors 28 vorgegeben ist.

Hingegen bilden die Stufen 48, 56 einen Formschluss gegenüber einer Verdrehung um die Längsachse 53, womit die Ausrichtung des Kolbenbewegungssensors 28 vorgegeben ist. In der durch die Stufen 48, 56 vorgegebenen relativen Ausrichtung ist fluchtend zu der Aufnahme 49 und dem Permanentmagneten 50 des Positionier- und/oder Ausrichtelements 42 an dem Sensorgehäuse 55 eine entsprechende Aufnahme 59 mit einem Permanentmagneten 60 vorgesehen. Auch der Permanentmagnet 60 ist in der Aufnahme 59 fixiert, beispielsweise durch Einkleben oder Einpressen. Die Magnetkraft zwischen den Permanentmagneten 50, 60 sichert die Anlage und damit die Position und Ausrichtung zwischen dem Positionier- und/oder Ausrichtelement 42 und dem Kolbenbewegungssensor 28.

Auf der dem Positionier- und/oder Ausrichtelement 42 abgewandten Seite verfügt das Sensorgehäuse 55 über eine ebene Stirnfläche 61. Im Bereich dieser Stirnfläche 61 verfügt der Kolbenbewegungssensor 28 über ein Innengewinde 62, welches hier von einem in das Sensorgehäuse 55 eingespritzten Gewindeeinsatz 63 ausgebildet ist. Das Innengewinde 62 bildet einen Demontage-Mitnehmer 64.

Des Weiteren ist in der Stirnseite 61 eine Steckeraufnahme 65 vorgesehen, in die ein Stecker 66 des Sensorkabels 43 eingesteckt werden kann. Vorzugsweise handelt es sich bei dem Format des Steckers 66 und der Steckeraufnahme 65 um eine 5-polige Pico-Clasp-Verbindung (eingetragene Marke).

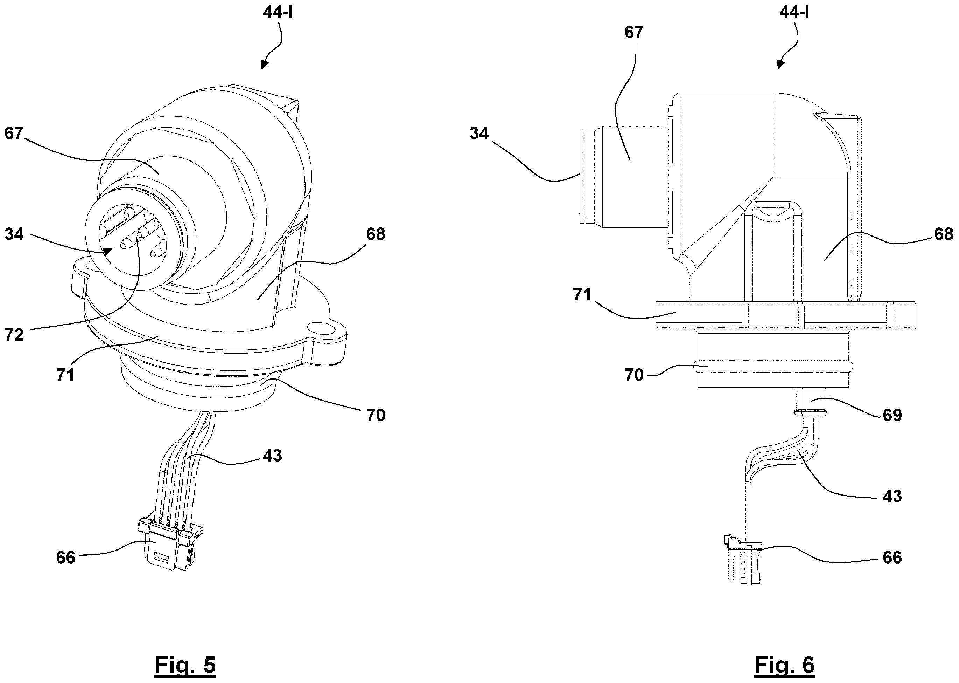

**Fig. 5 und 6** zeigen einen Gehäusestecker 44-I, wobei hier "I" kennzeichnet, dass es sich um einen Gehäusestecker eines ersten Typs (s. die Erläuterungen zu dem ersten Typ oben) handelt.

Wie in Fig. 6 zu erkennen ist, ist der Gehäusestecker 44-I L-förmig ausgebildet mit einem Schenkel 67 und einem hier mit einem Winkel von 90° abgewinkelten Schenkel 68. In der Stirnseite des Schenkels 68 ist eine Steckeraufnahme vorgesehen, in die ein Stecker 69 des Sensorkabels 43 eingesteckt werden kann. Vorzugsweise verfügen sowohl die Steckeraufnahme als auch der Stecker 69 über das Format "Pico-Clasp".

Der außenliegende Endbereich des Schenkels 68 erstreckt sich bei Orientierung koaxial zur Längsachse 53 in die Querbohrung 27. Der Endbereich des Schenkels 68 kann über einen umlaufenden Wulst 70 oder ein Dichtelement verfügen. In dem in die Querbohrung 27 eingesetzten Zustand erzeugt der Wulst 70 eine reibschlüssige, elastisch vorgespannte Sicherung des Schenkels 68 in der Querbohrung 27. Ergänzend kann hier eine Abdichtung erfolgen.

Im Austrittsbereich des Schenkels 68 aus dem Gehäuse 46 des Zylinderkopfs 4 verfügt der Schenkel 68 über einen hier umlaufenden Flansch 71. Der Flansch 71 findet Aufnahme in einer korrespondierenden Aufnahme oder Vertiefung des Gehäuses 46. Der Flansch 71 verfügt über parallel zur Längsachse 53 orientierte Durchgangsbohrungen, über die der Flansch 71 mit korrespondierenden Gewindebohrungen des Gehäuses 46 verschraubt werden kann. Vorzugsweise sind mehrere Bohrungen in dem Flansch 71 sowie Gewindebohrungen in dem Gehäuse 46 vorgesehen, so dass ein Verschrauben des Gehäusesteckers 44-I in unterschiedlichen Ausrichtungen um die Längsachse 53 mit dem Gehäuse 46 möglich ist.

Der Endbereich des Schenkels 67 bildet den Anschlussstecker 34, der den Anschluss des Anschlusskabels ermöglicht.

Für den Gehäusestecker 44-I verfügt der Anschlussstecker 34, wie insbesondere in Fig. 5 zu erkennen ist, über 5 Pins 72. Es handelt sich hierbei insbesondere um einen Anschlussstecker 34 des Typs "DIN-Stecker M 12 5-polig". Hierbei kann der Gehäusestecker 44-I des ersten Typs entsprechend den eingangs erläuterten Untertypen ausgebildet sein.

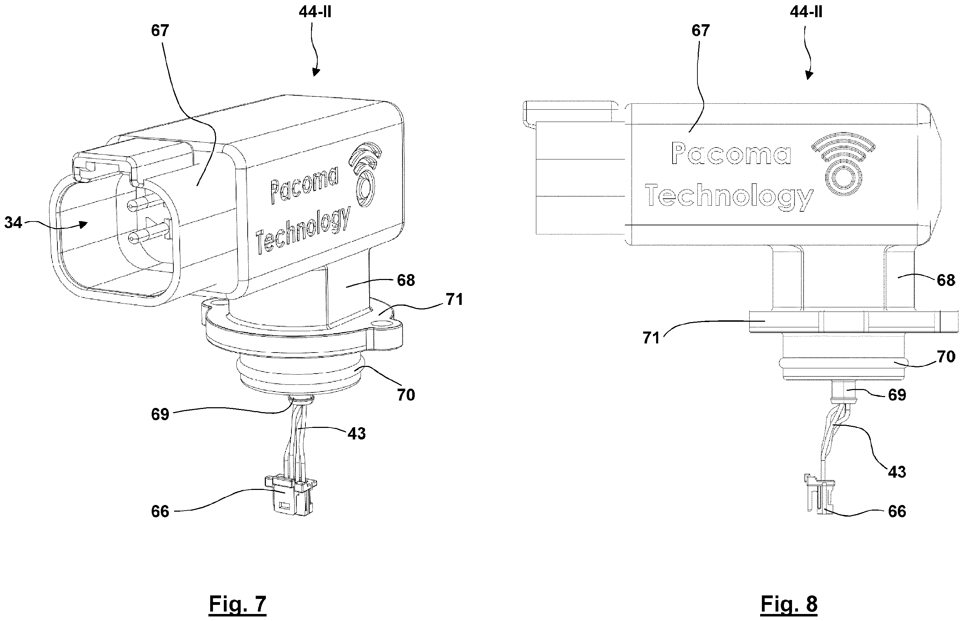

**Fig. 7 und 8** zeigen einen Gehäusestecker 44-II, wobei hier "II" kennzeichnet, dass es sich um einen Gehäusestecker eines zweiten Typs handelt. Hierbei kann der Gehäusestecker 44-II des zweiten Typs entsprechend den eingangs erläuterten Untertypen ausgebildet sein.

In den Gehäusestecker 44 sind jeweils die elektronischen Bauelemente integriert, um eine Modifikation der übertragenen Signale von dem Stecker 69 zu dem Anschlussstecker 34 vorzunehmen.

Mittels des Kolbenbewegungssensors 28 erfolgt eine direkte Messung des Hubs des Kolbens 7 oder der Kolbenstange 8 innerhalb der Kolben-Zylinder-Einheit 1. Der Kolbenbewegungssensor 28 basiert vorzugsweise auf einem berührungslos messenden Radarsystem, bei dem die Laufzeit zwischen einer Sendeeinheit, der Stirnfläche des Kolbens 7 oder der Kolbenstange 8 und des reflektierten Signals zurück zu einer Empfangseinheit ausgewertet wird. Aus der Laufzeit kann dann die Position und/oder die Geschwindigkeit mit hoher Genauigkeit und Robustheit ermittelt werden.

Vorzugsweise ist die Kolben-Zylinder-Einheit 1 mit dem integrierten Kolbenbewegungssensor 28 entsprechend der Schutzart IP69K ausgebildet.

Möglich ist, dass mittels des Kolbenbewegungssensors 28 ein Hub ermittelt werden kann, der im Bereich von 10 mm bis 2.000 mm, beispielsweise 30 mm bis 1.800 mm oder 40 mm bis 1.600 mm liegt. Hierbei kann beispielsweise eine Auflösung im Bereich von 0,2mm bis 4 mm, beispielsweise 0,5 bis 2 mm oder 0,8 bis 1,5 mm erreicht werden.

Vorteilhaft ist des Weiteren an der Abdichtung des Sensorsignalkanals 26 durch ein Dichtelement oder einen multifunktionalen Kollimator 35, dass die hohen hydraulischen Drücke, die auch 100 Bar bis 600 Bar betragen können, nicht zu Deformationen, Beanspruchungen und Beschädigungen des Kolbenbewegungssensors 28, des Sensorgehäuses 55 und der elektronischen Bauelemente des Kolbenbewegungssensors 28 führen können.

Der für das Sensorkabel 43 und dessen Verbindung mit dem Kolbenbewegungssensor 28 und dem Gehäusestecker 44 eingesetzte Pico-Clasp-Stecker kann über fünf Pins verfügen, welche mit GND, VDC, CAN LO, CAN HI und einem analogen Signal belegt sein können.

Das analoge Signal kann der Übertragung eines pulsweitenmodulierten Signals (PWM) dienen, wobei über die Pulsweitenmodulation das Messsignal übertragen wird. Alternativ möglich ist, dass als analoges Signal eine Spannung oder ein Strom übertragen wird, der proportional zu dem Messsignal ist.

Der Kolbenbewegungssensor 28 misst unter Umständen nicht lediglich den Hub und/oder die Geschwindigkeit des Kolbens 7 bzw. der Kolbenstange 8. Möglich ist, dass alternativ auch weitere Messgrößen (wie bspw. die Temperatur) gemessen, übertragen und/oder oder ausgewertet werden. Die Temperatur kann für die Temperaturkompensation verwendet werden.

Auch möglich ist, dass über den Gehäusestecker 44 eine bidirektionale Übertragung möglich ist, womit auch eine Softwareaktualisierung des Kolbenbewegungssensors 28 erfolgen kann und Update-Funktionen ausgeführt werden können.

Wird ein PWM-Signal übertragen, hat dieses vorzugsweise eine Frequenz von 500 Hz. Das Tastverhältnis gibt dabei Aufschluss über den gemessenen Weg des Kolbens. Befindet sich der Kolben vollständig eingefahren, kann beispielsweise das Tastverhältnis 5 % betragen, während für den voll ausgefahrenen Zustand des Kolbens das Tastverhältnis 95 % betragen kann.

### BEZUGSZEICHENLISTE

- 1: Kolben-Zylinder-Einheit
- 2: Zylinder
- 3: Innenraum
- 4: Zylinderkopf
- 5: Lagerbuchse
- 6: Anschluss
- 7: Kolben
- 8: Kolbenstange
- 9: Kolbenstangenauge
- 10: Lagerbuchse
- 11: Führungsbuchse
- 12: Stangendichtung
- 13: O-Ring
- 14: Stützring
- 15: O-Ring
- 16: Abstreifer
- 17: Gleitlager
- 18: Sicherungsmutter
- 19: O-Ring
- 20: Kolbenführungsring
- 21: Kolbendichtung
- 22: Kolbenführungsring
- 23: Schweißnaht
- 24: Anschluss
- 25: Teilkammer
- 26: Sensorsignalkanal
- 27: Querbohrung
- 28: Kolbenbewegungssensor
- 29: Hydraulikfluid
- 30: Längsmittelachse des Zylinders
- 31: Zylinderrohr
- 32: Druckkammer
- 33: Druckkammer
- 34: Anschlussstecker
- 35: Kollimator
- 36: Ringnut
- 37: Dichtelement
- 38: O-Ring
- 39: Absatz
- 40: Sicherungselement
- 41: Schraube
- 42: Positionier- und/oder Ausrichtelement
- 43: Sensorkabel
- 44: Gehäusestecker
- 45: Befestigungsschrauben
- 46: Gehäuse
- 47: Boden
- 48: Stufe
- 49: Aufnahme
- 50: Permanentmagnet
- 51: Innengewinde
- 52: Bohrung
- 53: Längsachse
- 54: Querbohrung
- 55: Sensorgehäuse
- 56: Stufe
- 57: Kontaktfläche
- 58: Kontaktfläche
- 59: Aufnahme
- 60: Permanentmagnet
- 61: Stirnfläche
- 62: Innengewinde
- 63: Gewindeeinsatz
- 64: Demontage-Mitnehmer
- 65: Steckeraufnahme
- 66: Stecker Sensorkabel
- 67: Schenkel
- 68: Schenkel
- 69: Stecker Sensorkabel
- 70: Wulst
- 71: Flansch
- 72: Pin

## Patentansprüche

1. Kolben-Zylinder-Einheit (1)
a) mit einem einen Zylinderkopf (4) aufweisenden Zylinder (2),
b) mit einem in dem Zylinder (2) axial bewegbaren Kolben (7), der über eine Druckkammer mit einem unter Druck stehenden Fluid beaufschlagt ist,
c) mit einem Kolbenbewegungssensor (28),
d) wobei der Kolbenbewegungssensor (28) in einer eine Längsachse (53) aufweisenden Querbohrung (27) des Zylinderkopfes (4) angeordnet ist, und
e) der Kolbenbewegungssensor (28) ein Sensorsignal aussendet, welches durch die Druckkammer (33) zu dem Kolben (7) oder einer Kolbenstange (8) gelangt, von dem Kolben (7) oder der Kolbenstange (8) reflektiert wird und durch die Druckkammer (33) wieder zu dem Kolbenbewegungssensor (28) gelangt,
**dadurch gekennzeichnet, dass**
f) die Querbohrung (27) fluidisch von der Druckkammer (33) getrennt ist, sodass die Querbohrung (27) nicht mit dem Fluid in der Druckkammer (33) beaufschlagt wird und die Drücke des Fluids nicht auf das Sensorgehäuse (55) des Kolbenbewegungssensors (28) wirken und bei der Entnahme des Sensorgehäuses (55) des Kolbenbewegungssensors (28) dennoch weiterhin eine Abdichtung der Druckkammer (33) gewährleistet ist, sodass das Fluid nicht aus der Druckkammer (33) über die Querbohrung (27) in die Umgebung austreten kann.

2. Kolben-Zylinder-Einheit (1) nach Anspruch 1, **dadurch gekennzeichnet, dass** die Querbohrung über ein Dichtelement (37) fluidisch von der Druckkammer (33) getrennt ist.

3. Kolben-Zylinder-Einheit (1) nach Anspruch 2, **dadurch gekennzeichnet, dass** das Sensorsignal durch eine dielektrische Linse oder einen Kollimator (35)
a) von dem Kolbenbewegungssensor (28) zu der Druckkammer (33) gelangt und/oder
b) nach der Reflektion an dem Kolben (7) oder der Kolbenstange (8) von der Druckkammer (33) zu dem Kolbenbewegungssensor (22) gelangt,
wobei die dielektrische Linse oder der Kollimator (35) in einem Sensorsignalkanal (26) angeordnet ist und das Dichtelement (37) zwischen der dielektrischen Linse oder dem Kollimator (35) und dem Sensorsignalkanal (26) angeordnet ist.

4. Kolben-Zylinder-Einheit (1) nach einem der Ansprüche 1 bis 3, **dadurch gekennzeichnet, dass** in der Querbohrung (27) in Richtung der Längsachse (53) der Querbohrung (27) ein Positionier- und/oder Ausrichtelement (42) abgestützt ist und der Kolbenbewegungssensor (28) in Richtung der Längsachse (53) an dem Positionier- und/oder Ausrichtelement (42) abgestützt ist.

5. Kolben-Zylinder-Einheit (1) nach Anspruch 4, **dadurch gekennzeichnet, dass** die Querbohrung (27) eine Sacklochbohrung ist und das Positionier- und/oder Ausrichtelement (42) an einem Boden (47) der Sacklochbohrung abgestützt ist.

6. Kolben-Zylinder-Einheit (1) nach Anspruch 4 oder 5, **dadurch gekennzeichnet, dass**
a) eine Position des Positionier- und/oder Ausrichtelement (42) in Richtung der Längsachse (53) der Querbohrung (27) und/oder
b) eine Ausrichtung des Positionier- und/oder Ausrichtelements (42) um die Längsachse (53) der Querbohrung (27)
durch mindestens ein Sicherungselement (40) gesichert sind/ist, wobei das Sicherungselement (40) vorzugsweise eine Schraube (41) ist, welche sich parallel zu der Längsachse (53) der Querbohrung (27) oder radial zu der Längsachse (53) der Querbohrung (27) erstreckt.

7. Kolben-Zylinder-Einheit (1) nach einem der Ansprüche 4 bis 6, **dadurch gekennzeichnet, dass** das Positionier- und/oder Ausrichtelement (42) und der Kolbenbewegungssensor (28) über Kontaktflächen (57, 58) aneinander anliegen, welche über einen Formschluss in Umfangrichtung um die Längsachse (53) der Querbohrung (27) eine Ausrichtung des Kolbenbewegungssensors (28) relativ zu dem Positionier- und/oder Ausrichtelement (42) einschränken oder vorgeben.

8. Kolben-Zylinder-Einheit (1) nach einem der Ansprüche 4 bis 7, **dadurch gekennzeichnet, dass** der Kolbenbewegungssensor (28) über eine Rastverbindung oder einen Permanentmagneten (50, 60) an dem Positionier- und/oder Ausrichtelement (42) gehalten ist.

9. Kolben-Zylinder-Einheit (1) nach einem der Ansprüche 4 bis 8, **dadurch gekennzeichnet, dass** der Kolbenbewegungssensor (28) auf der dem Positionier- und/oder Ausrichtelement (42) abgewandten Seite einen Demontage-Mitnehmer (64) aufweist, der mit einem Demontagewerkzeug koppelbar ist, um zur Demontage des Kolbenbewegungssensor (28) von dem Positionier- und/oder Ausrichtelement (42) Demontagekräfte auf den Kolbenbewegungssensor (28) aufzubringen, wobei vorzugsweise der Demontage-Mitnehmer (64) als Innengewinde (62) des Kolbenbewegungssensors (28) ausgebildet ist und insbesondere das Innengewinde (62) von einem Gewindeeinsatz (63) ausgebildet ist, welcher in ein Sensorgehäuse (55) des Kolbenbewegungssensors (28) eingespritzt oder eingepresst ist.

10. Kolben-Zylinder-Einheit (1) nach einem der vorhergehenden Ansprüche, **dadurch gekennzeichnet, dass** der Kolbenbewegungssensor (28) über ein Sensorkabel (43) mit einem Gehäusestecker (44) verbunden ist, wobei vorzugsweise das Sensorkabel (43) lösbar mit dem Kolbenbewegungssensor (28) und/oder dem Gehäusestecker (44) verbunden ist.

11. Kolben-Zylinder-Einheit (1) nach Anspruch 10, **dadurch gekennzeichnet, dass** der Gehäusestecker (44) lösbar mit dem Zylinderkopf (4) verbunden ist.

12. Kolben-Zylinder-Einheit (1) nach Anspruch 11, **dadurch gekennzeichnet, dass** der Gehäusestecker (44) einen Flansch (71) aufweist, der mit dem Zylinderkopf (4) verschraubt ist.

13. Kolben-Zylinder-Einheit (1) nach Anspruch 12, **dadurch gekennzeichnet, dass** der Flansch (71) in unterschiedlichen Ausrichtungen des Gehäusesteckers (44) um die Längsachse (53) der Querbohrung (27) mit dem Zylinderkopf (4) verschraubt werden kann.

14. Kolben-Zylinder-Einheit (1) nach einem der Ansprüche 10 bis 13, **dadurch gekennzeichnet, dass** der Gehäusestecker (44) L-förmig mit zwei abgewinkelten Schenkeln (67, 68) ausgebildet ist, wobei sich
a) ein Schenkel (68) in die Querbohrung (27) des Zylinderkopfes (4) und
b) ein Schenkel (67) außenliegend von dem Zylinderkopf (4) erstreckt.

15. Kolben-Zylinder-Einheit (1) nach einem der Ansprüche 10 bis 14, **dadurch gekennzeichnet, dass** der Gehäusestecker (44-I, 44-II)
a) als DIN-Stecker oder
b) als Deutsch-Stecker
ausgebildet ist.

## Claims

1. A piston-cylinder unit (1)
a) with a cylinder (2) which has a cylinder head (4),
b) with a piston (7) which can be axially moved in the cylinder (2) and which is pressurised with a pressurised fluid via a pressure chamber,
c) with a piston motion sensor (28),
d) wherein the piston motion sensor (28) is arranged in a transverse bore (27) of the cylinder head (4), this transverse bore (27) having a longitudinal axis (53), and
e) the piston motion sensor (28) emits a sensor signal which travels through the pressure chamber (33) to the piston (7) or a piston rod (8), is reflected by the piston (7) or the piston rod (8) and travels through the pressure chamber (33) to the piston motion sensor (28) again,
**characterised in that**
f) the transverse bore (27) is fluidically separated from the pressure chamber (33) so that the transverse bore (27) is not pressurised with the fluid in the pressure chamber (33) and the pressures of the fluid do not act on the sensor housing (55) of the piston motion sensor (28) and, when the sensor housing (55) of the piston motion sensor (28) is removed, a sealing of the pressure chamber (33) is still nevertheless ensured so that the fluid cannot escape from the pressure chamber (33), via the transverse bore (27), into the surrounding environment.

2. The piston-cylinder unit (1) according to claim 1, **characterised in that** the transverse bore is fluidically separated from the pressure chamber (33) via a sealing element (37).

3. The piston-cylinder unit (1) according to claim 2, **characterised in that** the sensor signal, through a dielectric lens or a collimator (35),
a) travels from the piston motion sensor (28) to the pressure chamber (33) and/or
b) after the reflection at the piston (7) or the piston rod (8), travels from the pressure chamber (33) to the piston motion sensor (22),
wherein the dielectric lens or the collimator (35) is arranged in a sensor signal channel (26) and the sealing element (37) is arranged between the dielectric lens or the collimator (35), and the sensor signal channel (26).

4. The piston-cylinder unit (1) according to any one of claims 1 to 3, **characterised in that** a positioning and/or alignment element (42) is supported in the transverse bore (27) in the direction of the longitudinal axis (53) of the transverse bore (27) and the piston motion sensor (28) is supported on the positioning and/or alignment element (42) in the direction of the longitudinal axis (53).

5. The piston-cylinder unit (1) according to claim 4, **characterised in that** the transverse bore (27) is a blind-hole bore and the positioning and/or alignment element (42) is supported on a floor (47) of the blind-hole bore.

6. The piston-cylinder unit (1) according to claim 4 or 5, **characterised in that**
a) a position of the positioning and/or alignment element (42), in the direction of the longitudinal axis (53) of the transverse bore (27), and/or
b) an alignment of the positioning and/or alignment element (42), around the longitudinal axis (53) of the transverse bore (27),
is/are secured, by at least one securing element (40), wherein the securing element (40) is preferably a screw (41) which extends parallel to the longitudinal axis (53) of the transverse bore (27) or in a radial manner relative to the longitudinal axis (53) of the transverse bore (27).

7. The piston-cylinder unit (1) according to any one of claims 4 to 6, **characterised in that** the positioning and/or alignment element (42) and the piston motion sensor (28) lie against one another via contact surfaces (57, 58), which restrict or predetermine an alignment of the piston motion sensor (28) relative to the positioning and/or alignment element (42) via a form-fit in the circumferential direction around the longitudinal axis (53) of the transverse bore (27).

8. The piston-cylinder unit (1) according to any one of claims 4 to 7, **characterised in that** the piston motion sensor (28) is retained on the positioning and/or alignment element (42) via a latching connection or a permanent magnet (50, 60).

9. The piston-cylinder unit (1) according to any one of claims 4 to 8, **characterised in that** the piston motion sensor (28) has, on the side facing away from the positioning and/or alignment element (42), a detachment catch (64) which can be coupled to a detachment tool in order to apply detachment forces onto the piston motion sensor (28) to detach the piston motion sensor (28) from the positioning and/or alignment element (42), wherein the detachment catch (64) is preferably formed as an internal thread (62) of the piston motion sensor (28) and in particular the internal thread (62) is formed by a threaded insert (63), which is injected or pressed into a sensor housing (55) of the piston motion sensor (28).

10. The piston-cylinder unit (1) according to any one of the preceding claims, **characterised in that** the piston motion sensor (28) is connected to a housing plug (44) via a sensor cable (43), wherein the sensor cable (43) is preferably releasably connected to the piston motion sensor (28) and/or the housing plug (44).

11. The piston-cylinder unit (1) according to claim 10, **characterised in that** the housing plug (44) is releasably connected to the cylinder head (4).

12. The piston-cylinder unit (1) according to claim 11, **characterised in that** the housing plug (44) has a flange (71), which is screwed onto the cylinder head (4).

13. The piston-cylinder unit (1) according to claim 12, **characterised in that** the flange (71) can be screwed onto the cylinder head (4), in different alignments of the housing plug (44), about the longitudinal axis (53) of the transverse bore (27).

14. The piston-cylinder unit (1) according to any one of claims 10 to 13, **characterised in that** the housing plug (44) is formed as an L-shape with two angled limbs (67, 68), wherein
a) one limb (68) extends into the transverse bore (27) of the cylinder head (4) and
b) one limb (67) extends outside of the cylinder head (4).

15. The piston-cylinder unit (1) according to any one of claims 10 to 14, **characterised in that** the housing plug (44-I, 44-II)
a) is formed as a DIN plug
b) or as a German plug.

## Revendications

1. Unité piston-cylindre (1)
a) comportant un cylindre (2) présentant une tête de cylindre (4),
b) comportant un piston (7) mobile axialement dans le cylindre (2) et sollicité par un fluide sous pression par l'intermédiaire d'une chambre de pression,
c) comportant un capteur de mouvement de piston (28),
d) dans laquelle le capteur de mouvement de piston (28) est disposé dans un alésage transversal (27) de la tête de cylindre (4), lequel alésage transversal présente un axe longitudinal (53), et
e) le capteur de mouvement de piston (28) émet un signal de capteur qui arrive jusqu'au piston (7) ou à une tige de piston (8) en passant par la chambre de pression (33), est réfléchi par le piston (7) ou la tige de piston (8) et revient au capteur de mouvement de piston (28) en passant par la chambre de pression (33),
**caractérisée en ce que**
f) l'alésage transversal (27) est séparé fluidiquement de la chambre de pression (33), de sorte que l'alésage transversal (27) n'est pas sollicité par le fluide dans la chambre de pression (33) et les pressions du fluide n'agissent pas sur le boîtier de capteur (55) du capteur de mouvement de piston (28) et, lors du retrait du boîtier de capteur (55) du capteur de mouvement de piston (28), une étanchéité de la chambre de pression (33) est néanmoins en outre assurée, de sorte que le fluide ne peut pas sortir de la chambre de pression (33) dans l'environnement par l'intermédiaire de l'alésage transversal (27).

2. Unité piston-cylindre (1) selon la revendication 1, **caractérisée en ce que** l'alésage transversal est séparé fluidiquement de la chambre de pression (33) par l'intermédiaire d'un élément d'étanchéité (37).

3. Unité piston-cylindre (1) selon la revendication 2, **caractérisée en ce que,** au moyen d'une lentille diélectrique ou d'un collimateur (35), le signal de capteur
a) arrive jusqu'à la chambre de pression (33) depuis le capteur de mouvement de piston (28) et/ou
b) après la réflexion sur le piston (7) ou la tige de piston (8), arrive jusqu'au capteur de mouvement de piston (22) depuis la chambre de pression (33),
dans laquelle la lentille diélectrique ou le collimateur (35) est disposé dans un canal de signal de capteur (26) et l'élément d'étanchéité (37) est disposé entre la lentille diélectrique ou le collimateur (35) et le canal de signal de capteur (26).

4. Unité piston-cylindre (1) selon l'une des revendications 1 à 3, **caractérisée en ce qu'**un élément de positionnement et/ou d'alignement (42) est appuyé dans l'alésage transversal (27) en direction de l'axe longitudinal (53) de l'alésage transversal (27) et le capteur de mouvement de piston (28) est appuyé sur l'élément de positionnement et/ou d'alignement (42) en direction de l'axe longitudinal (53).

5. Unité piston-cylindre (1) selon la revendication 4, **caractérisée en ce que** l'alésage transversal (27) est un alésage de type trou borgne et l'élément de positionnement et/ou d'alignement (42) est appuyé sur un fond (47) de l'alésage de type trou borgne.

6. Unité piston-cylindre (1) selon la revendication 4 ou 5,
**caractérisée en ce que**
a) une position de l'élément de positionnement et/ou d'alignement (42) en direction de l'axe longitudinal (53) de l'alésage transversal (27) et/ou
b) un alignement de l'élément de positionnement et/ou d'alignement (42) autour de l'axe longitudinal (53) de l'alésage transversal (27)
sont fixés par au moins un élément de fixation (40), dans laquelle l'élément de fixation (40) est de préférence une vis (41) qui s'étend parallèlement à l'axe longitudinal (53) de l'alésage transversal (27) ou radialement à l'axe longitudinal (53) de l'alésage transversal (27).

7. Unité piston-cylindre (1) selon l'une des revendications 4 à 6, **caractérisée en ce que** l'élément de positionnement et/ou d'alignement (42) et le capteur de mouvement de piston (28) sont adjacents l'un à l'autre par l'intermédiaire de surfaces de contact (57, 58) qui limitent ou prédéfinissent un alignement du capteur de mouvement de piston (28) par rapport à l'élément de positionnement et/ou d'alignement (42) par l'intermédiaire d'une liaison par complémentarité de forme dans la direction circonférentielle autour de l'axe longitudinal (53) de l'alésage transversal (27).

8. Unité piston-cylindre (1) selon l'une des revendications 4 à 7, **caractérisée en ce que** le capteur de mouvement de piston (28) est maintenu sur l'élément de positionnement et/ou d'alignement (42) par l'intermédiaire d'une liaison par encliquetage ou d'un aimant permanent (50, 60).

9. Unité piston-cylindre (1) selon l'une des revendications 4 à 8, **caractérisée en ce que** le capteur de mouvement de piston (28) présente, sur le côté opposé à l'élément de positionnement et/ou d'alignement (42), un moyen d'entraînement de démontage (64) qui peut être accouplé à un outil de démontage afin d'appliquer des forces de démontage sur le capteur de mouvement de piston (28) pour le démontage du capteur de mouvement de piston (28) de l'élément de positionnement et/ou d'alignement (42), dans laquelle le moyen d'entraînement de démontage (64) est de préférence réalisé en tant que filetage intérieur (62) du capteur de mouvement de piston (28) et en particulier le filetage intérieur (62) est réalisé par un insert fileté (63) qui est introduit ou enfoncé dans un boîtier de capteur (55) du capteur de mouvement de piston (28).

10. Unité piston-cylindre (1) selon l'une des revendications précédentes, **caractérisée en ce que** le capteur de mouvement de piston (28) est relié à un connecteur de boîtier (44) par l'intermédiaire d'un câble de capteur (43), dans laquelle le câble de capteur (43) est de préférence relié de manière amovible au capteur de mouvement de piston (28) et/ou au connecteur de boîtier (44).

11. Unité piston-cylindre (1) selon la revendication 10,
**caractérisée en ce que** le connecteur de boîtier (44) est relié de manière amovible à la tête de cylindre (4).

12. Unité piston-cylindre (1) selon la revendication 11,
**caractérisée en ce que** le connecteur de boîtier (44) présente une bride (71) qui est vissée à la tête de cylindre (4).

13. Unité piston-cylindre (1) selon la revendication 12,
**caractérisée en ce que**
la bride (71) peut être vissée à la tête de cylindre (4) dans différents alignements du connecteur de boîtier (44) autour de l'axe longitudinal (53) de l'alésage transversal (27).

14. Unité piston-cylindre (1) selon l'une des revendications 10 à 13, **caractérisée en ce que** le connecteur de boîtier (44) est réalisé en forme de L avec deux bras (67, 68) coudés, dans laquelle
a) un bras (68) s'étend dans l'alésage transversal (27) de la tête de cylindre (4) et
b) un bras (67) s'étend à l'extérieur de la tête de cylindre (4).

15. Unité piston-cylindre (1) selon l'une des revendications 10 à 14, **caractérisée en ce que** le connecteur de boîtier (44-I, 44-II) est réalisé
a) en tant que connecteur DIN ou
b) en tant que connecteur allemand.
